# EUROPEAN PATENT APPLICATION

(11) **EP 0 527 538 A2**
(43) Date of publication of application: **17.02.1993**
(21) Application number: 92202502.8
(22) Date of filing: 13.08.1992
(51) Int. Cl.: F16B 2/20, H02B 1/052, H02G 3/12

(54) **Fixing device by means of a releasable clamp connection**

(30) Priority: 13.08.1991 NL 9101382
(71) Applicant: VAN GEEL SYSTEMS B.V., NL-5282 WV Boxtel (NL)
(72) Inventor: Van Leeuwen, Jan, NL-5283 KK Boxtel (NL)
(74) Representative: Hoorweg, Petrus Nicolaas

(57) **Abstract**

Device for fixing a body on a continuous profile element (1), wherein the body is provided with a slightly convex plate-like element (2) having at least two lips (3) arranged at a mutual distance at an angle to the plate, wherein the profile element (1) has two parallel flanges (5), the free edges of which lie at a mutual distance (a) equal to or practically equal to the distance between the contact surfaces (6) of the lips (3), whereby it is possible simply by a pressing operation on the correct place of the plate-like element (2) to place the element in two positions with respect to direction of convexity, one in which the lips (3) clamp round the profile flanges (5) and the other in which the lips lie free or practically free of the flanges (5).

## Description

The invention relates to a device for fixing a body on a continuous profile element.

The necessity frequently occurs to fix bodies, for instance fitting boxes, on continuous profile elements, for instance a rail. This is usually carried out by means of clamps which are fastened with screws or by means of bayonet fittings which can be rotated into position behind flanges of the profile. These fastening methods are time-consuming and often provide an attachment that is not very robust.

The invention has for its object to improve the fixing device as referred to in the preamble. This device is distinguished in that the body is provided with a slightly convex plate-like element having at least two lips arranged at a mutual distance at an angle to the plate, wherein the profile element has two parallel flanges, the free edges of which lie at a mutual distance equal to or practically equal to the distance between the contact surfaces of the lips.

It is possible with such a convex plate-like element to place said element in two positions with respect to the direction of convexity simply by a pressing operation on the correct place of the plate-like element, one position in which the lips clamp round the profile flanges and the other in which the lips lie free or practically free of the flanges. Due to the prescribed distance this clamping takes place in robust manner and no screwing operation or the like has further to be applied. Release takes place by reversing the convexity of the plate-like element in the opposite direction so that the lips spring free of the profile flanges.

In a preferred embodiment the plate-like element is circular in top view, wherein at least three lips are arranged optionally distributed equidistantly along a pitch circle or the periphery.

With such a plurality of lips it is possible to place the plate-like element in different angular positions relative to the profile, for example through 120° in the case of three lips, respectively 90° in the case of four lips, or to make the plate-like element suitable for co-action with profiles having different distances between the flanges.

In order to increase the clamping action the lips are narrowed on the side of the contact surfaces facing the plate in order to form an undercut.

Finally, the lips can have a deep undercut such that the lip end is already applied resiliently against the flange in the clamping position of the plate-like element. A functional clamping is hereby obtained, also when the distance between the free edges of the flanges has small variation in dimensioning.

The invention will be further elucidated in the figure description hereinbelow of two embodiments.

In the drawing:
fig. 1 shows a perspective top view of a preferred embodiment of the device according to the invention,
fig. 2 is a perspective view of the plate-like element of fig. 1,
fig. 3 is an upright view of a detail of the plate-like element of fig. 1 as according to arrow III,
fig. 4 shows a lengthwise view of the profile with plate-like element for arranging thereon respectively arranged thereon, with a variant of the lip shape,
fig. 5 shows a perspective rear view of the fixing of a body on a continuous profile by means of the device according to the invention,
fig. 6 is a perspective view, partly in section, of a second embodiment of the fixing device according to the invention,
fig. 7 shows a lengthwise view corresponding with fig. 4 of a plate-like element for arranging, respectively arranged in a continuous profile.

Designated in the figures with the numeral 1 is the continuous profile on which a plate-like element 2 is to be fixed. In top view the plate-like element 2 is circular and provided with four lips 3 which extend downward along the periphery of the plate 2 at an angle thereto. In transverse view the plate-like element 2 is slightly convex. Arranged in the centre is a recess 4 which can serve among other things for fixing for the body for attaching to the profile 1, which is further elucidated below.

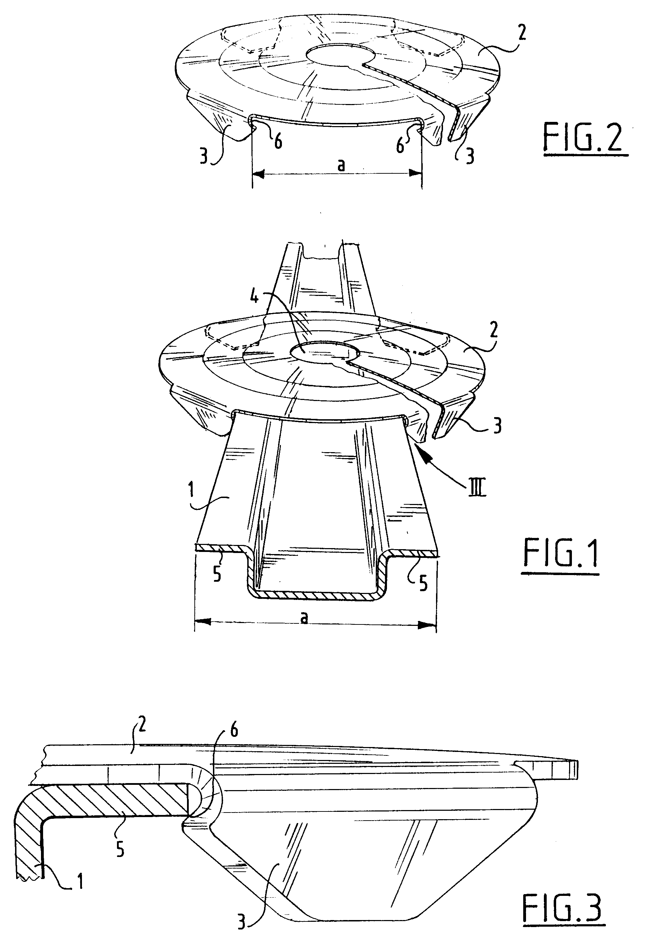

The profile in fig. 1 is substantially U-shaped and has two outward facing flanges 5. The distance a between the end edges of the outward pointing flanges 5 is equal to the distance between the contact surfaces 6 of two lips 3 along the periphery of plate 2. This means that in the upwardly convex situation of plate 2 the contact surfaces 6 come into contact with the end edges of the flanges 5 and a connection is effected between plate 2 and profile 1, see fig. 1 and 3.

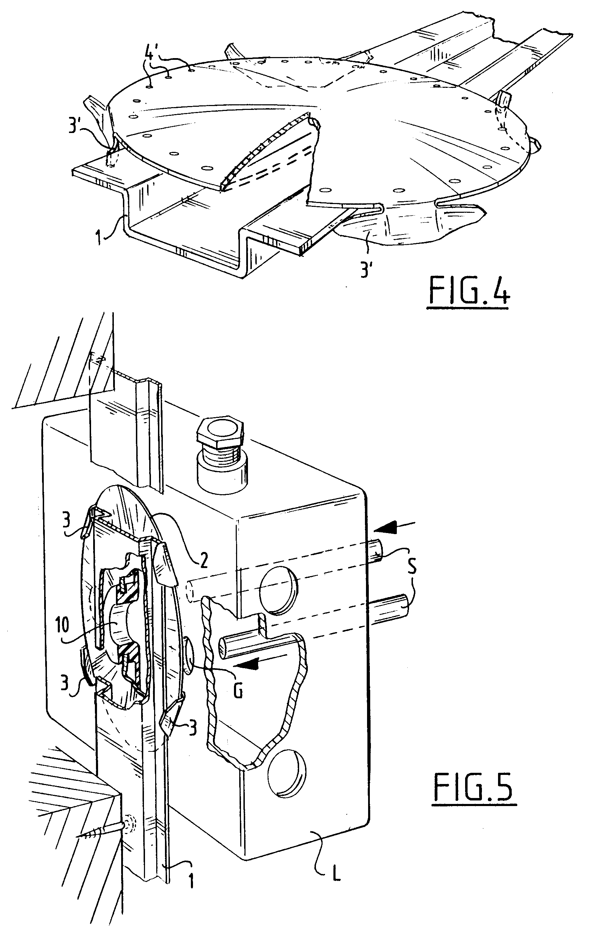

Release of plate 2 from the profile 1 can take place by pressing on plate 2 in the centre, whereby plate 2 will assume a reverse convex position and the lips 3 will deflect outward. The contact surfaces 6 herein come to lie free of the edges of the flanges 5 and the plate 2 can be lifted in upward sense from the profile 1. This is shown in fig. 4 wherein the fixed position is indicated by the full lines while the release position is shown by broken lines, wherein the plate 2 lies in convex position above profile 1.

In the embodiment shown four lips 3 are arranged in each case so that four positions of contact of the plate 2 with the profile flanges 5 are present. This ensures a firm attachment of the plate 2 relative to profile 1 so that comparatively great forces on the plate 2 are possible without sliding of the plate 2 relative to profile 1 occurring.

Prior to attachment, wherein initially the plate 2 must lie in the releasing position, the plate 2 can be slid along the profile 1 as long as this position is maintained, whereby the correct position can be determined. By pressing down the peripheral edge of plate 2, which is situated outside the profile 1, the plate can be reversed into the clamping position.

The greater undercut shown in the embodiment of fig. 4 enables the lip ends 3' to be applied resiliently against the flange edge.

It is noted that due to the use of four lips 3 the plate 2 can be rotated through 90° at a time relative to profile 1 without detracting from the desired clamping connection.

Fig. 5 shows a possibility of fixing a body L, here for instance a fitting box, on a continuous rail 1. This continuous rail can be fixed to a random ground or be mounted in a wall channel or the like. By fixing the plate 2 on the body L at suitable locations which lie for instance halfway between the central recess and the peripheral edge, the body L can subsequently be clamped onto the profile 1 by first pressing the plate 2 with the periphery thereof against the rear of the body L whereby the lips 3 deflect. By placing the lips on either side of the outward pointing flanges 5 of profile 1 the curvature direction of plate 2 can then be changed, as described above, by pressing on the edge strip of plate 2, for instance by means of a rod S which can be inserted through a hole G of the body L or by means of the body L itself. The lips 3 clamp round the flanges 5 and the fastening of the body L onto profile 1 is thus brought about.

Release can take place by pressing on the portion round the central recess of plate 2 by means of the rod S or by means of any other suitable auxiliary tool, for instance in the form of a lever which can be mounted in the fitting box.

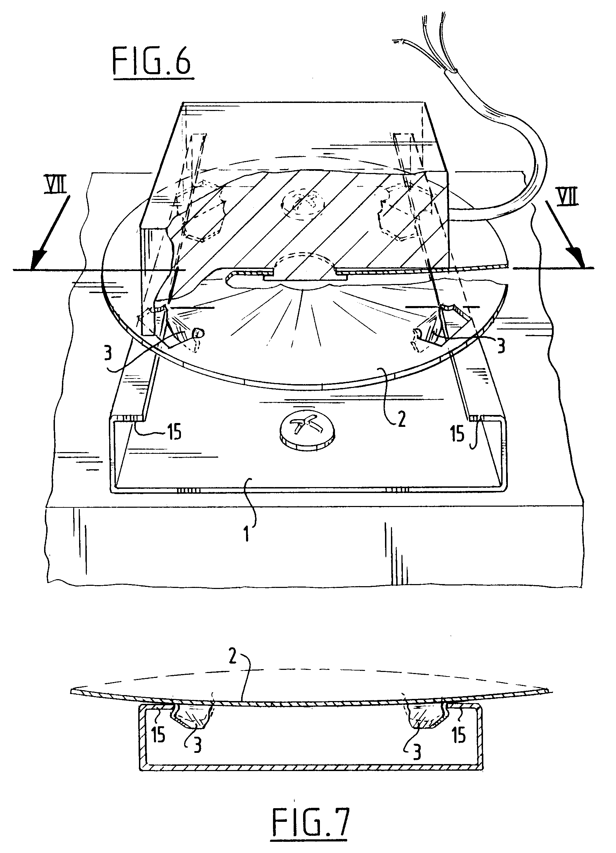

Fig. 6 and 7 show an embodiment wherein an inverse action is realized. The plate 2 corresponds with the plate 2 from the foregoing above described embodiment, but the continuous profile is embodied here with inward pointing flanges 15. By pressing in the plate 2 in accordance with the full line in fig. 7 fixing takes place since the lips 3 are pressed outward, whereby the contact surfaces come to lie against the inward pointing end edges of flanges 15, while release takes place by making the plate 2 upwardly convex, see the broken line in fig. 7. It is noted that the lips 3 do not lie along the periphery but are distributed over a smaller pitch circle, wherein the lips are cut out of the plate material. The central hole in the element facilitates pressing through of the plate into one of the two positions. The hole dimension determines the required press-through force. The plate can optionally be embodied with a series of extra holes or recesses to influence the stiffness of the plate, see the holes 4' in fig. 4. The action is otherwise the same.

The invention is not limited to the above described embodiments. The plate does not have to be circular but an element that is oval, rectangular or polygonal in top view can also suffice.

## Claims

1. Device for fixing a body on a continuous profile element**, characterized in that** the body is provided with a slightly convex plate-like element having at least two lips arranged at a mutual distance at an angle to the plate, wherein the profile element has two parallel flanges, the free edges of which lie at a mutual distance equal to or practically equal to the distance between the contact surfaces of the lips.

2. Device as claimed in claim 1, **characterized in that** at least three lips are arranged placed in a circle.

3. Device as claimed in claims 1 and 2, **characterized in that** the lips are arranged along the periphery.

4. Device as claimed in claims 1 and 2, **characterized in that** the lips are cut out of the plate-like element.

5. Device as claimed in claims 1 and 2, **characterized in that** the lips are placed in a circle at equal mutual distance.

6. Device as claimed in any of the foregoing claims 2-5, **characterized in that** the plate-like element is circular in top view.

7. Device as claimed in claims 1-6, **characterized in that** the lip narrows on the side of the contact surface facing the plate in order to form an undercut.

8. Device as claimed in claim 7, **characterized in that** the flanges of the continuous profile point away from each other and that the distance between the flanges is greater than that between the contact surfaces on the lip ends in the clamping position of the element.

9. Device as claimed in claim 7**, characterized in that** the flanges of the continuous profile point toward each other and that the distance between the flanges is smaller than that between the contact surfaces on the lip ends in the clamping position of the element.
